# EUROPEAN PATENT SPECIFICATION

(11) **EP 3 390 526 B1**
(45) Date of publication and mention of the grant of the patent: **07.10.2020**
(21) Application number: 16809075.1
(22) Date of filing: 13.12.2016
(51) Int. Cl.: C08L 23/08

(54) **HALOGEN-FREE FLAME RETARDANT POLYMER COMPOSITION COMPRISING NOVEL POLAR ETHYLENE COPOLYMER**
HALOGENFREIE FLAMMHEMMENDE POLYMERZUSAMMENSETZUNG MIT NEUARTIGEM POLAREM ETHYLENCOPOLYMER
COMPOSITION POLYMÈRE RETARDATRICE DE FLAMME EXEMPTE D'HALOGÈNE COMPRENANT DE NOUVEAUX COPOLYMÈRES D'ÉTHYLÈNE POLAIRE

(30) Priority: 18.12.2015 EP 15201077
(43) Date of publication of application: 24.10.2018
(73) Proprietor: Borealis AG, 1220 Vienna (AT)
(72) Inventor: SULTAN, Bernt-ake, 444 42 Stenungsund (SE); KARLSSON, Linus, 444 55 Stenungsund (SE); PRIETO, Oscar, 416 74 Göteborg (SE)
(74) Representative: Maiwald Patent- und Rechtsanwaltsgesellschaft mbH
(86) International application number: PCT/EP2016/080715
(87) International publication number: WO 2017/102676

(56) References cited:
- LUNDGREN ANNA ET AL: "Influence of the structure of acrylate groups on the flame retardant behavior of ethylene acrylate copolymers modified with chalk and silicone elastomer", JOURNAL OF FIRE SCIENCES,, vol. 25, no. 4, 1 July 2007 (2007-07-01), pages 287-319, XP009189233,

## Description

### Field of the invention

The present invention relates to a halogen-free flame retardant polymer composition comprising a polar ethylene copolymer comprising an acrylate with a bulky side group, inorganic flame retardant filler and a silicone fluid or gum. The present invention is also directed to a cable comprising the halogen-free flame retardant polymer, a layered structure, a cable and to a process for producing the polar ethylene copolymer.

### Background of the invention

A typical electrical power cable or wire generally comprises one or more conductors in a cable core, which is surrounded by one or more insulation layers or sheaths of polymeric material. The core is typically copper or aluminium surrounded by a number of different polymeric layers, each serving a specific function, e.g. a semiconducting shield layer, an insulation layer, a metallic tape shield layer and a polymeric jacket. Each layer can provide more than one function. For example, low voltage wire or cable are often surrounded by a single polymeric layer that serves as both an insulating layer and an outer jacket, while medium to extra-high voltagewire and cable are often surrounded by at least separate insulating and jacket layers. A power cable core may for example be surrounded by a first polymeric semiconducting shield layer, a polymeric insulating layer, a second polymeric semiconducting shield layer, a metallic tape shield, and a polymeric jacket.
A wide variety of polymeric materials have been utilized as electrical insulating, jacket and shield materials for cables.
Such polymeric materials in addition to having suitable dielectric properties must also be enduring and must substantially retain their initial properties for effective and safe performance over many years of service. Such materials have also to meet stringent safety requirements as laid down in international standards. In particular, single cable, or bundle of cables, must not burn by itself or transmit fire; the combustion gases of a cable must be as harmless as possible to humans, the smoke and combustion gases formed must not obscure escape routes or be corrosive.
Flame retardants are chemicals used in polymers that inhibit or resist the spread of fire. For improving the flame retardancy of polymers compositions to be used in wires or cables, compounds containing halides were first added to the polymer. However these compounds have the disadvantage that upon burning, hazardous and corrosive gases like hydrogen halides are liberated.

Then, one approach to achieve high flame retardant properties in halogen-free polymer compositions has been to add large amounts, typically above 60 wt% of inorganic flame retardant fillers such as hydrated and hydroxy compounds. Such fillers, which include Al(OH)₃ and Mg(OH)₂ decomposes endothermically at temperatures between 200 and 300°C, liberating inert gases. The drawback of using large amounts of fillers is the deterioration of the processability and the mechanical properties of the polymer composition.
EP393959 discloses a halogen-free flame retardant polymer composition which is substantially free of halogen compounds and of organometallic salts comprising a copolymer of ethylene with one or more comonomers selected from the group consisting of alkyl acrylates, alkyl methacrylates, acrylic acid, methacrylic acid and vinyl acetate, a silicone fluid or gum and an inorganic flame retardant filler.

EP1695997 relates to a polyethylene with acrylic acids used in a flame retardant composition. The polyethylene is compressing a flame retardant polymer composition comprising a polyethylene with acrylic acid copolymer.

US4081587 from GULF relates to a process for preparing a copolymer of ethylene and (meth) acrylic acid. Typically, a copolymer of ethylene and methyl acrylate is dissolved in a diarylalkane. A transesterification catalyst and either isopropanol or tertiary butanol is added to the polymer solution which then is heated to reflux to convert the polymerized methyl acrylate moietyto the isopropyl or tertiary butyl acrylate moiety. Following completion of the transesterification reaction, any excess isopropanol or tertiary butanol is removed by distillation. The polymer solution is then heated to a temperature in the order of 320°C to thermally crack the isopropyl or tertiary butyl acrylate and form the corresponding ethylene-acrylic acid copolymer which finally is recovered by filtration.

It has now been found that by providing in a halogen-free flame retardant polymer composition a polar ethylene copolymer comprising an acrylate with a bulky end group, inorganic flame retardant filler and a silicone fluid or gum, the flame retardant properties as well as the mechanical properties of its moulded or extruded products may be improved.

In particular, in order to meet larger scale fire tests on cables characterising the behaviour of bunched cables are performed. Such tests include e.g. EN50399, which is a common test methods for cables under fire conditions. Heat release and smoke production measurement are performed on cables during flame spread test. EN50399 describes the testing procedure for Euro classification of internal cables, such as building wires. The classification includes six different classes (F, E, D, C, B2, B1 and A). It describes the demands for the most flame retarded cables. In class A the gross calorific
potential should be below 2 Mj/kg, which excludes most polymeric materials. In class B1-D the cables will undergo a bunch cable test and are classified according to the flame spread, total heat release, peak heat release and fire growth rate. Additional classifications include smoke production, flaming droplets/particles and the acidity of the burning gases. For class E only a single wire burning test needs to be fulfilled (EN60332-1) and for class F no performance needs
to be determined.
It is an object of the invention to make a halogen-free flame retardant polymer composition with good fire resistance. The polymer composition should further have high tensile strength, while retaining a good elongation at break. Another object is to increase the amount of inorganic flame retardant filler while retaining the mechanical properties, such as tensile strength and elongation at break.

### Brief summary of the invention

The present invention is a halogen-free flame retardant polymer composition comprising:
a) a polar ethylene copolymer comprising a polar comonomer of formula 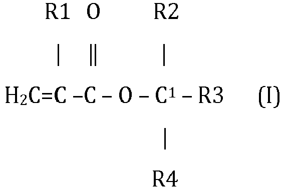 in which R1 is -H or an alkyl group with 1-6 carbon atoms R2, R3 & R4 each comprise an alkyl group with 1 to 6 carbon atoms and the amount of polar comonomer of formula (i) is 3 to 40 wt% in the polar ethylene copolymer; and further comprising (meth)acrylic acid groups in an amount of 0.1 to 30 wt%
b) an inorganic flame retardant filler in an amount of 10 to 70 wt%
c) a silicone gum in an amount of 0.1 to 20 wt%.

Polymers are defined to have more than at least 1000 repeating units. The definition of ethylene copolymer is a polymer with more than 50 wt% of ethylene monomer. With the expression "polar ethylene copolymer" means "the polar ethylene copolymer comprising a polar comonomer of formula (I)" throughout the text.

The invention also relates to a layered structure of the halogen-free flame retardant polymer composition and to a cable comprising the layered structure. The cable comprises a metal conductor and a polymer layer comprising the halogen-free flame retardant polymer composition.
The invention further relates to a process for producing a polar ethylene copolymer comprising a polar comonomer of formula (I) in which R1 is -H or an alkyl group with 1-6 carbon atoms, R2, R3 and R4 each comprise an alkyl group with 1 to 6 carbon atoms and the amount of polar comonomer of formula (I) is 3 to 40 wt% in the polar ethylene copolymer; and further comprising (meth)acrylic acid groups in an amount of 0.1 to 30 wt%, wherein the polar ethylene copolymer has MFR2 of 0.1 to 4 g/10 min and wherein the polar ethylene copolymer is heat treated after the reactor at a temperature of 200 to 300°C for 5 to 30 min. The invention further relates to use of the polar ethylene copolymer for compounding the halogen-free flame retardant polymer composition at a maximum of 220°C.

It is an essential part of the invention that the carbon (C¹ in formula (I)) that the R2, R3 and R4 are attached to is a quaternary carbon atom, i.e. no hydrogen is attached. The R2, R3 and R4 groups will favour the reaction of releasing an alkene through ester pyrolysis reaction. The polar comonomer will then comprise a -COOH group, referred to as (meth)acrylic acid. The term "(meth)acrylic" is intended to embrace both acrylic and methacrylic. The -COOH group can form ionic bonds that improve both mechanical and flame retardant properties.

The halogen-free flame retardant polymer composition according to the invention is an environmental friendly and low cost solution which compared to the common halogen-free technologies for cables application based on aluminium hydroxide or magnesium hydroxide works well already at moderate filler levels e.g. 30 wt%. While flame retardant compounds based
on hydrates typically need at least 60 wt% filler load to withstand a bunch burningtest. The compounds according to the present invention and hydrate based compounds provides low amount of non-black smoke with low acidity and toxicity. In addition the compounds according to the represent invention are easy to extrude, have low water absorption compared with other inorganic flame retardant fillers and therefore have better electrical properties. Additionally, the low filler content results in highly improved physical and low temperature properties as well as a higher flexibility combined with excellent abrasion resistance. The improved flexibility makes installation of the cables easier. The halogen-free flame retardant polymer composition has low dripping during fire and it passes European Standard test EN 50399 on Fire Performance of Electric Cables (FIPEC) up to class B2.

### The detailed description of the invention

The polar ethylene copolymer of the invention is produced by polymerising ethylene with a comonomer according to formula (I) units as defined above in a high pressure (HP) radical polymerisation process using free radical polymerization in the presence of one or more initiator(s) and optionally using a chain transfer agent (CTA) to control the MFR of the polymer. The HP reactor can be e.g. a well-known high pressure tube or autoclave reactor or a mixture thereof, suitably a high pressure tube reactor. The free radical polymerization takes place in the reactor only. The high pressure (HP) polymerisation and the adjustment of process conditions for further tailoring the other properties of the polar ethylene copolymer depending on the desired end application are well known and described in the literature, and can readily be used by a skilled person. Suitable polymerisation temperatures range up to 400°C, suitably from 80 to 350°C and pressure from 70 MPa, suitably 100 to 400 MPa, more suitably from 100 to 350 MPa. The high pressure polymerization is generally performed at pressures of 100 to 400 MPa and at temperatures of 80 to 350 °C. Such processes are well known and well documented in the literature.
The incorporation of the comonomer according to formula (I) units, as well as optional other comonomer(s), and the control of the comonomer feed to obtain the desired final content of said polar ethylene copolymer containing comonomer according to formula (I) units can be carried out in a well-known manner and is within the skills of a skilled person.

The production of polyethylene at high pressures is a highly exothermic reaction, and requires the removal of large amounts of heat. For this reason, the reaction is normally carried out in a high pressure tube reactor, and conversion of monomer to polymer in a single pass through the reactor is ordinarily from about 10% to about 25% of the monomer charged. The unreacted ethylene, polar comonomer and polymer formed are released from the high pressure tube reactor through a suitable valve, which is opened periodically, and collected in a product receiver where the polymer and monomer are separated from each other. The pressure in the product receiver, generally about 100MPa, is much lower than that in the reactor, and the sudden drop in pressure facilitates the removal of unreacted ethylene from the polymer. The polar comonomer of formula (I) has conversion of close to 100%, due to the fact that all acrylates has a higher reactivity in comparison to ethylene. This is also advantageous to the invention since the polar comonomer of formula (I) will only pass the reactor once. Since this reduces the formation of vinyl acrylic acid from the polar comonomer of formula (I).

Further details of the production of polar ethylene copolymer by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

The polar ethylene copolymer comprises a polar comonomer of formula

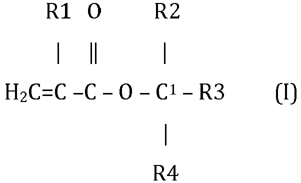

in which R1 is -H or an alkyl group with 1-6 carbon atoms,
R2, R3 & R4 each comprise an alkyl group with 1 to 6 carbon atoms,
R1 group is -H or an alkyl group with 1-6 carbon atoms, suitably R1 is -CH₃, which makes the polar ethylene copolymer more temperature stable. This feature of the invention will improve the extrusion characteristics of the compound and make it more temperature stable, meaning longer production run and less cleaning of the extruder, since fewer deposits are formed in the extruder.
R2, R3 & R4 each comprise an alkyl group with 1 to 6 carbon atoms, suitably R2, R3 &R4 groups are identical and neither of R2-R4 groups comprise heteroatoms, i.e. R2-R4 only comprise carbon and hydrogen atoms. Most suitably, all three R2-R4 groups are -CH₃, which is the most temperature stable compound, in which the polar ethylene copolymer comprise a polar comonomer of tert-butyl acrylate.

The polar ethylene copolymer suitably has an MFR₂ of 0.3 to 10g/10min, more suitably 1 to 7 g/10min. The polar ethylene copolymer has an MFR₂ of 0.1 to 10g/10min, suitably 0.3 to 4 g/10min.
The polar ethylene copolymer comprises a further functional group of (meth)acrylic acid, - COOH. The polar ethylene copolymer will then comprise two active side groups. The -COOH group is suitably an acrylic acid, more suitably a methacrylic acid. The - COOH group can form ion bonds with inorganic flame retardant filler. The functional group of - COOH is suitably created in a post reactor process, which can be any post reactor process taking place after the high pressure reactor. It is recommended to perform the post reaction by heat treatment, suitably in the product receiver, which already exists in typical high pressure polymerization units for low density polyethylene and its copolymers. The post reaction is controlled by carefully adjusting the temperature and residence time in the product receiver for receiving the targeted ratio of tertiary (meth) acrylate and carboxylic acid groups. Suitably the heat treatment after the reactor is performed at a temperature of 200 to 300°C, suitably 220°C to 280°C. The residence time is 5 to 30min, suitably 10 to 30min, more suitably 15 to 25min. The temperature and the residence time shall be selected to convert enough of the polar comonomer of formula (I) to an acrylic acid. A high temperature gives a faster reaction. The size, location and the temperature of the product receiver can easily be used to perform the desired heat treatment of
the polar ethylene copolymer. In a suitable embodiment at least 5 wt% of the polar copolymer of the formula (I) is converted into a functional group of -COOH, more suitably at least 30 wt%. In another embodiment 30 to 100 wt% the polar copolymer of the formula (I) is converted into a functional group of -COOH, suitably 30 to 90 wt%.

In one embodiment the high pressure reactor, in which the polar ethylene copolymer is made, has no fresh monomer feed that comprises any -COOH groups, i.e. (meth)acrylic acid. With no monomer feed means that no fresh feed comprises any monomer comprising -COOH groups. Feeds that comes from recycled stream is not fresh feed and might comprise small amount of monomer comprising -COOH, suitably the recycled stream is purified in at least one step from any monomer comprising -COOH groups.

This is an advantageous process for manufacturing the polar ethylene copolymer comprising further functional groups of -COOH. No monomer in reactor has any carboxylic groups that are corrosive and cause wear and tear of the reactor. The carboxylic groups are mostly present in polymerised form, in which they are much less corrosive. Due to the high polymerisation reactivity in the high pressure reactor of acrylates more or less no polar copolymer of the formula (I) be created by the high temperature in the high pressure tube reactor.

The polar ethylene copolymer comprises an amount of 0.1 to 30 wt% of (meth)acrylic acid groups, suitably 1 to 20 wt% and most suitably 5 to 10 wt%.

In one embodiment of the halogen-free flame retardant polymer composition, the polar ethylene copolymer constitutes at least 50 wt% or more suitably more than 70 wt% of the polymer part of the halogen-free flame retardant polymer composition. The halogen-free flame retardant polymer composition is suitably a halogen-free flame retardant polyethylene composition according to any embodiment in this description.

In one embodiment of the invention of the halogen-free flame retardantpolymer composition comprises a polar ethylene copolymer present in an amount of 30 to 85 wt% suitably in an amount of 35 to 75 wt%, more suitably between 38 to 65 wt% and even more suitably between 40 to 62 wt% of the halogen-free flame retardant polymer composition.

In one embodiment the polar ethylene copolymer suitably comprise one or more further polar comonomer, suitably one polar comonomer.

Typical further polar comonomers are vinyl esters of monocarboxylic acids having 1 to 4 carbon atoms, such as vinyl acetate (VA), and (meth)acrylates of alcohols having 1 to 4 carbon atoms, such as methyl (meth)acrylate (MA & MMA). Especially suitable polar comonomers are butyl acrylate (BA), ethyl acrylate (EA) and methyl acrylate (MA). The most suitably further polar comonomer is MA. The term "(meth)acrylic" is intended to embrace both acrylic and methacrylic.

The amount of the further polar comonomer units in the polar ethylene copolymer issuitably 5 to 40 wt%, in suitably 10 to 30 wt%, and yet more suitably between 15 and 30 wt%. In a more preferred embodiment is a low amount of the further polar comonomer content desired, in which the total amount of the further polar comonomers in the polar ethylene copolymer is from 1 to 20 wt%, suitably 5 to 15 wt%. The further polar comonomer is suitably selected from VA, BA, MA, MMA & EA or mixtures thereof, most suitably from BA, MA and EA.

The inorganic flame retardant filler is suitably a metal carbonate filler included in the compositions according to the present invention in an amount of between 10 to 70 wt%, more suitably 20 to 60 wt%, even more suitably between 25 and 50 wt% and most suitably between 30 and 48 wt% of the total composition. The metal carbonate filler is suitably a carbonate of magnesium and/or calcium. Examples of suitable metal carbonate fillers are calcium carbonate, magnesium carbonate, and huntite 2[Mg3 Ca (CO3)4]. The filler may contain small amounts of a hydroxide,
typically less than 5 wt% of the filler, suitably less than 3 wt%. For example, there may be small amounts of magnesium hydroxide or magnesium oxide. Suitably, the filler is not a substantially hydrated compound, it can contain small amounts of water, usually less than 3 wt% the filler, suitably less than 1.0 wt%. The filler may have been surface treated with a carboxylic acid or salt to aid processing and provide better dispersion of the filler in the halogen-free flame retardant polymer composition. There can also be additional filler(s).
Suitably, the metal carbonate filler used in the flame retardant composition according to the present invention comprises at least 50 wt% of calcium carbonate. More suitably, the metal carbonate filler is magnesium carbonate or calcium carbonate.
The metal carbonate filler will generally have an average particle size of less than 50 micron, preferably less than 5 micron and most preferably about 1 to 2.5 microns.

The halogen-free flame retardant polymer composition further comprises a silicon fluid or gum. Suitable silicone fluids and gums include for example organopolysiloxane polymers comprising chemically combined siloxy units selected from the group consisting of R₃SiO_{0.5}, R₂SiO,R¹SiO_{1.5}, R¹R²SiO_{0.5}, RR¹SiO, R¹₂SiO, RSiO_{1.5} and SiO₂ units and mixtures thereof in which each R represents independently a saturated or unsaturated monovalent hydrocarbon radical, and each R¹ represents a radical such as R or a radical selected from the group consisting of a hydrogen atom, hydroxyl, alkoxy, aryl, vinyl or allyl radicals.
The organopolysiloxane suitably has a viscosity of approximately 600 to 300x10⁶ centipoise at 25°C. An example of an organopolysiloxane which has been found to be suitable is a polydimethylsiloxane having a viscosity of approximately 20x10⁶ centipoise at 25°C. The silicone fluid or gum can contain fumed silica fillers of the type commonly used to stiffen silicone rubbers e.g. up to 50 wt%.

The amount of silicone fluid or gum included in the halogen-free flame retardant polymer composition according to the present invention is from 0.1 to 20 wt%, suitably from 0.1 to 10 wt% even more suitably between 0.2 or 0.5 to 5 wt% of the halogen-free flame retardant polymer composition.

In one embodiment the halogen-free flame retardant polymer composition comprises a further ethylene polymer that is free from polar comonomers of formula (I). This suitably comprises ethylene and further polar comonomers such as vinyl esters of monocarboxylic acids having 1 to 4 carbon atoms, such as vinyl acetate (EVA), and (meth)acrylates of alcohols having 1 to 4 carbon atoms, such as methyl (meth)acrylate (EMA & EMMA). Especiallysuitable polar comonomers are butyl acrylate (EBA), ethyl acrylate (EEA) and methyl acrylate (EMA). The most suitable the further polar comonomer is EMA. The term "(meth)acrylic" is intended to embrace both acrylic and methacrylic.

The amount of the further polar comonomer units in the ethylene polymer that is free from polar comonomers of formula (I) is suitably 5 to 70 wt%, in suitably 10 to 50 wt%, and yet more suitably between 15 and 30 wt%. In a more preferred embodiment, a low amount of the further polar comonomer content is desired, in which the total amount of the further polar comonomers in the polar ethylene copolymer is from 1 wt% to 35 wt%, suitably 10 wt% to 25 wt%. The further polar comonomer is suitably selected from EVA, EBA, EMA, EMMA & EEA or mixtures thereof, most suitably from EBA, EMA and EEA.

In addition to the polar ethylene copolymer, the silicone fluid or gum and the inorganic flame retardant filler, the halogen-free flame retardant polymer compositions according to the present invention may contain additional ingredients such as, for example, antioxidants, UV stabilizers and small amounts of other conventional polymer additives such as stabilizers e.g. water tree retardants, scorch retardants, lubricants, colouring agents including carbon black and foaming agents. The total amount of additives is generally 0.3 to 10 wt %, suitably 1 to 7 wt %, more suitably 1 to 5 wt.%.

One embodiment of the invention relates to a layered structure comprising a substrate of metal and a polymer layer adjacent to the metal, wherein the polymer layer comprises a halogen-free flame retardant polymer composition according to any previous embodiment. Adjacent means in close contact, suitably in direct contact with the metal layer. Suitably, the layered structure is a wire cable in which the substrate is a metal conductor, typically aluminium or copper.

Another embodiment of the invention is a cable with a metal conductor, typically aluminium or copper, and a polymer layer surrounding the metal conductor. The cable is suitably a flame retardant cable comprising at least one layer comprising the flame retardant composition. The halogen-free flame retardant polymer composition according to the present invention is suitable for the manufacture of wires, cables and/or electrical devices. Cables may be communication cables or more suitably electrical or power cables. The cable can typically be used in buildings or in automotive applications. The compositions can be extruded around a wire or cable to form an insulating or jacketing layer or can be used as bedding compounds. Therefore the present invention also provides a cable having a layer comprising the halogen-free flame retardant polymer composition of the invention. Suitably, the cable is a low voltage cable, typically below 1000 V. In another embodiment the cable is a communication cable wherein the jacket comprises the halogen-free flame retardant polymer composition, e.g. data and fibre optic cables.

The insulation layer of the low voltage power cable suitably has a thickness of 0.4 mm to 3.0 mm, more suitably 2 mm or lower, depending on the application. The insulation is suitably directly coated onto the metal conductor.

The invention relates to a process for producing a polar ethylene copolymer comprising a polar comonomer of formula 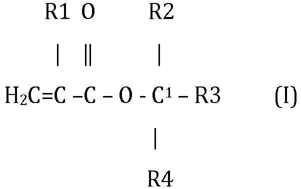
in which R1 is -H or an alkyl group with 1-6 carbon atoms
R2, R3 and R4 each comprise an alkyl group with 1 to 6 carbon atoms
and the amount of polar comonomer is 3 to 40 wt% in the polar ethylene copolymer; and further comprising (meth)acrylic acid groups in an amount of 0.1 to 30 wt%, wherein the MFR2 is 0.1 to 4 g/10min and wherein polar ethylene copolymer is heat treated after the reactor at a temperature of 200 to 300°C for 5 to 30min. R1, R2, R3 and R4 can be selected according to any previous embodiment.

The heat treatment of the polar ethylene copolymer after the reactor will convert the polar comonomer of formula (I) to an acrylic acid, i.e. the bulky side group will be split off via ester pyrolysis. The heat treatment can be done by any suitable manner. One advantage of the invention is that a very low level (meth)acrylic acid monomer is present in the reactor. An unsaturated acid is stronger than a saturated acid, for example (meth) acrylic acid has a pKa value of 4.25, while a saturated one exemplified by hexanoic acid has a PKa value of 4.88. When copolymerized with ethylene, the acid will also be dissolved in the supercritical reaction mixture in which water concentration is very low. By avoiding pumping a rather strong acid in which water is easily soluble, the corrosive action on the process part of the high pressure reactor and it feeding systems will be significantly reduced. The invention is best utilized by having as short
residence time in the high pressure reactor in combination with a suitable temperature in the high pressure reactor. If a monomer comprising (meth) acrylic acid would be used in the reactor, the tear and wear on the reactor would increase dramatically due to corrosion caused by the carboxylic acid groups inside the reactor. Some of the polar comonomer will be converted into an (meth)acrylic acid but with short residence time in the reactor in combination with
controlled temperature the amount of (meth) acrylic acid inside the reactor will be at a level in which wear and tear can be kept at a minimum.

The heat treatment after the reactor is performed at a temperature of 200 to 300°C, suitably 220°C to 280°C. The residence time is 5 to 30min, suitably 10 to 30min, more suitably 15 to 25min. The residence temperature and time shall be selected to convert enough of the polar comonomer of formula (I) to an acrylic acid. A high temperature gives a faster reaction.

In one embodiment the polar ethylene copolymer is heat treated in the product receiver(s) of a typical high pressure polyethylene reactor. In the product receiver(s) the polymer melt is collected after the polymerization step and the product receiver(s) act as a hold up tank for the extruder which pelletizes the polymer melt. The residence time in the product receiver is commonly between 15 to 30 minutes. This is advantageous since the residence time and temperature range 200 to 250°C is very suitable for producing a terpolymer with desired amount of the polar comonomer of formula (I) and the acrylic acid.

The reactor, such as a high pressure tube reactor or autoclave reactor is suitably operated above the critical pressure, in particular at a pressure between 1000 and 3500 bar, more specifically between 2000 and 3200 bar in case of a high pressure tube reactor, and at temperatures between 165 and 340 °C, the feed temperature of the reactor being in the range of 165 to 200 °C.

The reaction mixture comprising ethylene, chain transfer agent, polar comonomer of formula (I), optionally additional further polar comonomers and initiator reacts within the reactor under formation of polar ethylene copolymer. The mixture and polar ethylene copolymer as product leaves the reactor at the end thereof. The polymer and the volatile part of the reaction mixture comprising mainly ethylene monomer, polar comonomer of formula (I), optional polar comonomer and chain transfer agent are subsequently separated from each other in a high pressure separator (HPS) and a low pressure separator (LPS), usually referred to as product receiver. The residence time in the high pressure separator is typically very short (level kept to a minimum). While the residence time in the LPS is longer, typically about 20 minutes according to the invention.

The chain transfer agent and/or comonomers can further be separated from the volatile part of the reaction mixture leaving the high pressure separator and low pressure separator, in particular from the ethylene monomer in a gas purification unit. The gas purification unit removes comonomers and/or chain transfer agents from the reactor output.

The ethylene monomer as well as the comonomer and chain transfer agent can be directly recycled within the present process, or alternatively may be separated by e.g. distillation and stored in a storage tank prior to being reintroduced into the feed section of the compressor or a
combination thereof.

The recycle stream containing comonomer and chain transfer agent can be fed into a dewaxing unit prior to the gas purification unit. Here, the gaseous mixture is separated from waxes in a traditional dewaxing unit. The chain transfer agent and / or comonomer might be separated from each other in a gas-purification unit or recycled back to the compressor unit. This means that the recycle stream comprise more or less pure ethylene.

The invention also relates to the use of a polar ethylene copolymer according to any previous embodiment wherein the compounding is done at a maximum 220°C, suitably at a maximum of 200°C. Any compounding step is included, such as pelletizing, compounding the halogen-free flame retardant polymer composition according to the invention and compounding in cable extruders. The advantage is that no additional (meth)acrylic acid is formed in the additional steps.

The halogen-free flame retardant polymer compositions may be prepared by mixing together the polar ethylene copolymer, the silicone fluid or gum and the metal carbonate filler using any suitable means such as conventional compounding or blending apparatus, e.g. a Banbury mixer, a 2-roll rubber mill or a twin screw extruder. The halogen-free flame retardant polymer composition is prepared by blending the above mentioned components together ata temperature which is sufficiently high to soften and plasticise the polar ethylene copolymer, but not high enough to convert the polar comonomer of formula (I) typically a temperature in the range 120 to 220°C, suitably 120 to 200°C.

### Test methods

### Cable Fire Test

Fire tests on cables with an outer diameter of 8,5 mm were performed in accordance with EN 50399 (1^{st} ed 2011-06-09), "Common test methods for cables under fire conditions - Heat release and smoke production measurement on cables during flame spread test - Test apparatus, procedures, results"

The test method describes an intermediate scale fire test of multiple cables mounted on a vertical cable ladder in a web configuration. The test provides data for the early stages of a cable fire. It addresses the hazard of propagation of flame along the cable, the potential, by the measurement of heat release rate, for the fire to affect areas adjacent to the compartment of origin, and the hazard, by the measurement of production of light obstructing smoke, of reduced visibility in the room of origin and surrounding enclosures.

In accordance with EN 50399 the ignition source was a ribbon-type propane burner described in EN 60332-3-10. The flow rate of propane was equal to a mass flow of 442 mg/s which corresponds with a nominal heat release rate of 20.5 kW. The air flow of the burner was 1550 mg/s. The test flame was applied for 1200 seconds and the airflow in the testing chamber was 8000l/min. The cables were mounted on the ladder with one cable diameterspacing between the cables. These conditions are prescribed for cables intended for Class B2, C and D of the construction product directive.

The classification criterions for the different classes are outlined in EN 13501-6:2014. For the different classes limits of Flame Spread (FS), Heat Release Rate (HRR), Peak HRR, Total Heat Release (THR) and Fire Growth Rate index (FIGRA), as well as Smoke Production Rate (SPR) and Smoke production (SMOGRA), acidity and flaming droplets are defined. For class B2, C and D also single wire burning test in accordance with IEC 60332-1-2 needs to be fulfilled. Cables classified as E need only to fulfil the single wire burning requirements. Accordingly among these classes the demand is highest on class B2 cables and lowest on class E.

### Density

The method for determining density is following ISO 17872-2 for sample preparation and ISO 1183-1 / method A for the density measurement.

### MFR

The melt flow rate MFR2 was measured in accordance with ISO 1133 at 190°C and a load of 2.16 kg for ethylene homo and copolymers.

### Tensile strength/ Elongation at break

Tensile strength and elongation at break are measured
according to ISO 527 (for injection moulded articles) Crosshead
speed for testing the modulus was 1mm/min.
Crosshead speed for testing the tensile strength and elongations was 50 mm/min.
Test specimen produced as described in EN ISO 1872-2, specimen type: 1A (multi-purpose-specimen) or 1B (F3/4) acc ISO 527-2 were used.

### Copolymer content

For the TBMA/MAA terpolymer the two different structures were quantified by FTIR. For TBMA the peak area of the peak absorbing at 3430 cm-1 was determined and for MAA the peak area at 1699 cm-1 was determined. Film thickness was used for normalisation. These peaks were calibrated by dissolving the corresponding monomers in a solution in accordance with ASTM D6248.

The BA and EA content of the EBA and EEA copolymer was determined in the same way by calculating the peak area height ratio of the peak absorbing at 840cm-1 and 3450cm-1 respectively and the reference peak at 2020cm-1. The same procedure was used for determine the VA content of the EVA copolymer by calculating the peak area height ratio of the peak absorbing at 610cm-1 and the reference peak at 2670cm-1.

### Materials

FR4897 is a commercial silicone gum/polyethylene master batch supplied by Borealis. It contain 40 wt% of silicone rubber (Polydimethylsiloxane, with a viscosity of 19500 Pas at 0.01 Hz) mixed into a low density polyethylene (MFR₂ is 0.3 g/10min and Density 923 kg/m³).

EBA (8 wt%), ethylene butylacrylate copolymer is made in a high pressure radical process, where ethylene monomers were reacted with butylacrylate amounts so as to yield 8 wt% butyl acrylate content in the copolymer. The MFR₂ is 0.45g/10min.

EBA (18 wt%), ethylene butylacrylate copolymer is made in a high pressure radical process, where ethylene monomers were reacted with butylacrylate amounts so as to yield 8 wt% butyl acrylate content in the copolymer. The MFR₂ is 4.7g/10min.

EMAA (9 wt%), ethylene methacrylic acid copolymer containing an amount of 9 wt% of methacrylic acid, having a melt flow rate at 190 °C, 2.16 kg (MFR2) of 3.0 g/10min, and a density of 0.934 g/cm3; available as Nucrel 0903HC from Du Pont.

EEA (14.6 wt%), ethylene ethyl acrylate copolymer is made in a high pressure radical process, where ethylene monomers were reacted with ethyl acrylate amounts so as to yield 14.6 wt% ethyl acrylate content in the copolymer. The MFR₂ is 4.6g/10min.

EVA (19 wt%), ethylene vinyl acetate copolymer is made in a high pressure radical process, where ethylene monomers were reacted with vinyl acetate amounts so as to yield 19 wt% vinyl acetate content in the copolymer. The MFR₂ is 6.4g/10min.

LE4423 is a commercial moisture curable ethylene vinyl tri methoxy silane (1.35 wt%) a MFR₂ of 0.9 g/10 min. Supplied by BorealisAB.

LE4476 is a commercial ambient curing catalyst master batch supplied by Borealis AB. It is used in combination (5 wt%) with LE4423 during the cable manufacturing step.

LDPE, ethylene homopolymer is made in a high pressure radical process, where ethylene monomers were reacted to get an ethylene homopolymer with a MFR₂ of 2 g/10min.
Poly propylene wax (Clariant, TP Licene PP 1602 GR),
Butyl rubber (United chemical products: BK-1675N),
Zink stearate (Peter Greven: Ligastar ZN 202)
Zinkborate (Richard Baker Harrison Ltd: Storflam ZB2335)
Phenolic stabilizer (BASF: Irganox 1010)

Aluminium hydroxide (Albemarle: Martinal ON3131)
Calcium carbonate (Vereinigte Kreidewerke Damman KG: Microsöhl 40),
OMYA EXH 1SP is a CaCO3 with a particle size d50 of 1.4 µm, distributed by Omya.

ETBMA/MAA(6 wt%/6 wt%), ethylene tert-butyl methacrylate copolymer is made in a high pressure radical process, where ethylene monomers were reacted with tert-butyl methacrylate amounts so as to yield 15 wt% tert-butyl methacrylate content in the copolymer tert-butyl methacrylate copolymer prior the product receiver. This polymer was heat treated in the product receiver for 20 min at a temperature of 250°C which resulted in the terpolymers describe above. The MFR₂ is 1.5g/10min.

The polymerisation of ETBMA/MAA terpolymer was performed in a high pressure tube 660 m long split feed high pressure reactor (Union Carbide type A-1). The inner wall diameter is 32 mm. The reaction conditions are outlined in Table 1.

The polymerisation of ETBMA/MAA terpolymer was performed in two-zone high pressure tubular reactor. Ethylene, 99.9 wt% pure, analysed by gas chromatography, and comonomer were mixed prior to increasing the pressure of this reaction mixture using intensifiers. The pressure of the reaction mixture entering the reactor was between 2000 and 2500 bar. The reaction was initiated by radical generated from peroxide and oxygen. The peak temperatures on the reactor
was between 200 -300°C. The formed polymer was separated from the unreacted process gas in a product receiver operated at ∼100 bar and 250°C for 20 min. 50 wt% of the separated process gas was recycled back to the intensifiers, while the other 50 wt% was purified in a gas purification system and the purified ethylene returned to the process. The formed polymer is conveyed to an extruder where a degassing unit is connected (vent gas). Gaseous compounds are removed from the polymer and the vent gas goes to the gas purification.

**Table 1 Polymerisation conditions of the ethylene/tert-butylacrylate/methacrylic acid terpolymers.**

| Parameter | Setting |
|---|---|
| Pressure, bar | 2250 |
| Intitation temperature, °C | 115 |
| Peak 1 temperature, °C | 240 |
| Peak 2 temperature, °C | 264 |
| Return gas temperature, °C | 248 |
| Initiators | |
| Oxygen front feed, kg/h | 1.4 |
| Oxygen side feed, kg/h | 2.0 |
| Peroxide front feed, kg/h | 7.5 |
| Peroxide side feed, kg/h | 2.5 |
| Chain transfer agent | |
| Methyl ethyl ketone front feed, kg/h | 0 |
| Methyl ethyl ketone side feed, kg/h | 0 |
| Comonomer | |
| TBMA front feed, kg/h | 470 |
| TBMA side feed, kg/h | 470 |

### Sample preparation

### Compounding

The comparative and inventive jacketing compounds were compounded on a Buss MDK 100 machine. The settings are in Table 2.

**Table 2. Compounding conditions for inventive and comparative compounds**

| Parameter | Setting |
|---|---|
| Mixer screw temperature | 80°C |
| Mixer screw speed | 170 rpm |
| Specific energy input | 0.22 kWh/kg |
| Mixer temperature zon1 | 140°C |
| Mixer temperature zon 2 | 130°C |
| Extruder screw speed | 30 rpm |
| Extruder temperatures including die | 150°C |
| Filter mesh | None |

The bedding compound which is based on a mixture of 52 wt% aluminium hydroxide (Albemarle: Martinal ON3131), 31.78 wt% calcium carbonate (Vereinigte Kreidewerke Damman KG: Microsöhl 40), 8 wt-% poly propylene wax (Clariant, TP Licene PP 1602 GR), 5 wt% butyl rubber (United chemical products: BK-1675N), 1.5 wt-% zink stearate (Peter Greven: Ligastar ZN 202), 1.5 wt-% zinkborate (Richard Baker Harrison Ltd: Storflam ZB2335) and 0.2% phenolic stabilizer (BASF: Irganox 1010) was produced in a 375 dm³ Banbury kneader. Materials were processed until ahomogenous melt was accomplished and then mixed for another 3 minutes. The still hot materials were taken from the Banbury mixer and loaded into the pelletizing extruder of a 46 mm Buss line for pellets production.

### Cable Construction

The cables construction were in accordance with VDE 0250 Teil 214 (NHXMX). Consisting of 3x 1.5 mm² copper conductor insulated with 0.5 mm 95 wt% LE4423 and 5% LE4476. A bedding as described above was used at a thickness of 1.4 mm. The cables had an outer diameter of 8.5 mm.

### Preparation of cables.

0.5+/-0.05 mm insulation layer was extruded onto a 1.5 mm² copper conductor on a Francis Shaw 60mm/24D wire line equipped with a medium compression 3 zones PE screw (Constance type). Three cores were twisted together using a Northhampton Twister. The bedding (Extruder: Maillefer 45mm/30D/Megolon screw) and sheathed (Extruder Mapre 60mm/24D/3 zones PE type medium compression screw) layers were applied by a tandem extrusion process. In order to avoid adhesion between the bedding and its surrounding layers talcum were "powdered" onto the cores and bedding layers just prior the bedding and sheath layer were applied.

For applying the bedding layer a pressure tool providing an overall cable core diameter of 6.1 mm was used. The sheathing layers were applied by tube on tooling providing an outer cable diameter of 8.5 mm at a temperature profile 150/170/180/180/180/185/190°C.

**Table 3. Mechanical and flame retardant properties of cables**

| | Inv 1 | Inv 2 | Ref 2 | Ref 3 |
|---|---|---|---|---|
| Component | | | | |
| FR4897 | 12 | 12 | 12 | 12 |
| IRGANOX 1010 | 0.2 | 0.2 | 0.2 | 0.2 |
| OMYA EXH 1SP | 35 | 45 | 30 | 35 |
| TBMA(6/6% MFR₂ =1.5) | 52.8 | 42.8 | - | - |
| EBA (8 wt%) | - | - | 57.8 | - |
| EMAA (9 wt% MAA) | - | - | - | 52.8 |
| Extrusion pressure(bar) | 84 | 103 | 75* | 110 |
| FIPEC BW test | B2 | B2* | E | B2 |
| Mechanical properties ( Tensile Strength MPa/ Elong %) | 15/484(Pass)) | 12/290(pass) | 11/256(Pass) | 15/258(Pass) |

Both comparative examples and inventive examples composition were used to produce a German standard NHXMH type cable with Visico insulation and a bedding based on mixture of ATH and calcium carbonate. Reference or inventive compositions were used on the jacketing layer.

Ref 2 and Inv 1 are formulation based on the same filler with similar levels. In addition both comprises a silicon gum MB (FR4897) and antioxidant additive (Irganox).

Ref 2 is Casico™ FR6082 produced by the Borealis, which has as an ethylene butyl acrylate base resin (8 wt% BA).

Inv 1 and Inv 2 unlike Ref 2, comprises a base resin (TBMA test C) which is a terpolymer comprising tert-butylmethacrylate and methacrylic acid. Presence of this unique base resin provides a dramatic increase of the flame retardant performance increasing up to class B2 keeping the same good mechanical properties as Ref 2.

Ref 3 contains higher level of filler than Inv 1 and Inv2. However, the performance is similar
as Inventive examples and mechanical properties are disadvantegeous due to the high level of filler.

Ref 3 shows good mechanical properties and also B2 flame retardant performance. However,
Inv1 shows a surprisingly good processability effect compared to Ref 3. Pressure on the
extruder is much lower for Inv1 compared to Ref 3.

**Table 4. Mechanical properties as function of filler loading for the E/TBMA/MAA terpolymers in comparison with established high pressure copolymers.**

| Polyme r type | Comono mer type | Comonomer content | | Melt -ing poin t | MFR₂ | Tensile strength at 40 wt% Filler loading | Elongation at break at 40 wt% filler loading | Tensile strength at 50 wt% Filler loading | Elongation at break at 50 wt% filler loading |
|---|---|---|---|---|---|---|---|---|---|
| | | wt % | mole % | °C | g/10 min | MPa | % | MPa | % |
| ETBMA /MAA | TBMA /MAA | 6/ 6 | 1.3/ 2.2 | 100 | 1.5 | 15 | 330 | 13 | 300 |
| LDPE | None | 0 | 0 | 110 | 2 | 12 | 11 | 10 | 5 |
| EMAA | MAA | 9 | 3.1 | 101 | 2.5 | 11 | 230 | - | - |
| EBA | BA | 18. 0 | 4.7 | 96 | 1 | 8 | 430 | 7.0 | 410 |
| EEA | EA | 14. 6 | 4.6 | 95 | 1.4 | 12 | 700 | 10 | 660 |
| EVA | VA | 15. 3 | 4.8 | 93 | 0.3 | 15 | 620 | 12 | 530 |
| EVA | VA | 19. 0 | 6.4 | 87 | 0.6 | 20 | 680 | 15 | 630 |

The flame retardant properties of halogen-free polyolefins are commonly improved by "diluting" the polymer with large amount of non-burnable inorganic fillers e.g. aluminium hydroxide, magnesium hydroxide, calcium carbonate etc. Filler levels between 25-65 wt% are common for materials used as insulation or sheathing for cables. However, when adding filler to an ethylene
based polymer the mechanical properties are diminishing as a function of the filler content. The Tables show that an LDPE loses nearly all of its mechanical strength already at a filler loading of 40 wt%. The ability to add fillers is however increasing by adding co-monomers reducing the crystallinity and accordingly also the melting point of the polymer. This reduces the heat deformation properties of the material and, in order to e.g. meet the 90°C heat deformation
demands of a HM4 material as described in EN609-1-1, the melting point must be in the range of 95°C and the tensile strength at break have to exceed 10 MPa and the elongation at break has to be higher than 150 %.
Table 4 shows that the inventive E/TBMA/MAA terpolymers show very favourable properties in this respect. At a melting point of 100°C the material shows excellent mechanical performance at both 40 and 50 wt% filler loading. On the other hand the EMAA copolymer which have similar melting point show marginal performance already at 40 wt% loadings. The acrylates, EEA and EBA, show low tensile strength and very high elongation at break. An optimal elongation at break for a cable material is in the range of 300 %. Higher elongation at break makes it difficult to strip the cable. The EVA with 15.3 wt% VA has marginal heat deformation and tensile
strength performance. If the VA content is increased further to 19 wt% VA the tensile strength is increased but at a cost of even worse heat deformation performance.

## Claims

1. A halogen-free flame retardant polymer composition comprising
a) a polar ethylene copolymer comprising a polar comonomer of formula 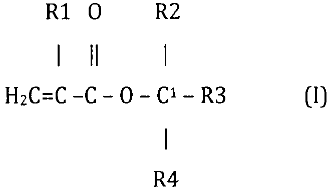
in which R1 is -H or an alkyl group with 1-6 carbon atoms
R2, R3 and R4 each comprise an alkyl group with 1 to 6 carbon atoms and the amount of polar comonomer of formula (I) is 3 to 40 wt% in the polar ethylene copolymer; and further comprising (meth)acrylic acid groups in an amount of 0.1 to 30 wt%;
b) an inorganic flame retardant filler in an amount of 10 to 70 wt%
c) a silicone gum in an amount of 0.1 to 20 wt%; wherein the polar ethylene copolymer has a MFR₂ of 0.1 to 4 g/10min.

2. The halogen-free flame retardant polymer composition according to claim 1 wherein R1 is - CH₃.

3. The halogen-free flame retardant polymer composition according to claim 1 or claim 2 wherein all R2, R3 & R4 are the same.

4. The halogen-free flame retardant polymer composition according to claim 1 wherein all R2, R3 & R4 are -CH₃.

5. The halogen-free flame retardant polymer composition according to any one of the preceding claims wherein the polar ethylene copolymer has an MFR₂ of 0.3 to 4 g/10min.

6. The halogen-free flame retardant polymer composition according to any one of the preceding claims wherein the acrylic acid groups are created in a post reactor process.

7. The halogen-free flame retardant polymer composition according to claims 6 wherein the polar ethylene copolymer has no fresh monomer feed to the high pressure reactor that comprises any (meth)acrylic acid.

8. A layered structure comprising a substrate of metal and a polymer layer adjacent to the metal, wherein the polymer layer comprises a halogen-free flame retardant polymer composition according to any one of the preceding claims.

9. A cable comprising a metal conductor and at least one or more layers, wherein at least one layer is a polymer layer comprising a halogen-free flame retardant polymer composition according to claims 1 to 7 surrounding the metal conductor.

10. A cable according to claim 9 wherein the polymer layer is a flame retardant layer.

11. A process for producing a polar ethylene copolymer comprising a polar comonomer of formula 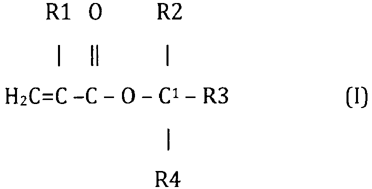
in which R1 is -H or an alkyl group with 1-6 carbon atoms
R2, R3 & R4 each comprise an alkyl group with 1 to 6 carbon atoms formula (I)
and the amount of polar comonomer of formula (I) is 3 to 40 wt% in the polar ethylene copolymer; and further comprising (meth)acrylic acid groups in an amount of 0.1 to 30 wt%, wherein the polar ethylene copolymer has MFR2 of 0.1 to 4 g/10min and wherein the polar ethylene copolymer is heat treated after the reactor at a temperature of 200 to 300°C for 5 to 30 min.

12. The process for producing a polar ethylene copolymer according to claim 11 wherein the polar ethylene copolymer is heat treated in the product receiver.

13. Use a polar ethylene copolymer according to any one of the preceding claims wherein the compounding of the halogen-free flame retardant polymer composition is done at a maximum of 220°C.

## Patentansprüche

1. Halogenfreie flammhemmende Polymer-Zusammensetzung, umfassend
a) ein polares Ethylen-Copolymer, umfassend ein polares Comonomer der Formel 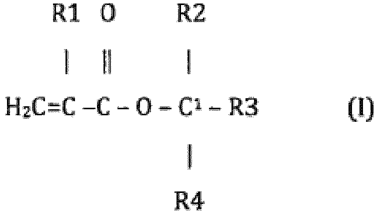
worin R1 -H oder eine Alkylgruppe mit 1-6 Kohlenstoffatomen ist
R2, R3 und R4 jeweils eine Alkylgruppe mit 1 bis 6 Kohlenstoffatomen umfassen
und die Menge an polarem Comonomer der Formel (I) 3 bis 40 Gew.-% in dem polaren Ethylen-Copolymer beträgt; und weiterhin (Meth)acrylsäuregruppen in einer Menge von 0,1 bis 30 Gew.-% umfasst;
b) einen anorganischen, flammhemmenden Füllstoff in einer Menge von 10 bis 70 Gew.-%
c) einen Silikonkautschuk in einer Menge von 0,1 bis 20 Gew.-%; wobei das polare Ethylen-Copolymer eine MFR₂ von 0,1 bis 4 g/10 min aufweist.

2. Halogenfreie flammhemmende Polymer-Zusammensetzung nach Anspruch 1, wobei R1 -CH₃ ist.

3. Halogenfreie flammhemmende Polymer-Zusammensetzung nach Anspruch 1 oder Anspruch 2, wobei alle R2, R3 & R4 gleich sind.

4. Halogenfreie flammhemmende Polymer-Zusammensetzung nach Anspruch 1, wobei alle R2, R3 & R4 -CH₃ sind.

5. Halogenfreie flammhemmende Polymer-Zusammensetzung nach einem der vorangehenden Ansprüche, wobei das polare Ethylen-Copolymer eine MFR₂ von 0,3 bis 4 g/10 min aufweist.

6. Halogenfreie flammhemmende Polymer-Zusammensetzung nach einem der vorangehenden Ansprüche, wobei die Acrylsäuregruppen in einem Nach-Reaktor-Verfahren erzeugt werden.

7. Halogenfreie flammhemmende Polymer-Zusammensetzung nach Anspruch 6, wobei das polare Ethylen-Copolymer keine frische Monomerzufuhr zu dem Hochdruckreaktor aufweist, die irgendeine (Meth)acrylsäure umfasst.

8. Schichtstruktur, umfassend ein Substrat aus Metall und eine an das Metall angrenzende Polymerschicht, wobei die Polymerschicht eine halogenfreie flammhemmende Polymer-Zusammensetzung nach einem der vorangehenden Ansprüche umfasst.

9. Kabel, umfassend einen Metallleiter und mindestens eine oder mehrere Schichten, wobei mindestens eine Schicht eine Polymerschicht ist, umfassend eine halogenfreie flammhemmende Polymer-Zusammensetzung nach den Ansprüchen 1 bis 7, die den Metallleiter umgibt.

10. Kabel nach Anspruch 9, wobei die Polymerschicht eine flammhemmende Schicht ist.

11. Verfahren zur Herstellung eines polaren Ethylen-Copolymers, umfassend ein polares Comonomer der Formel 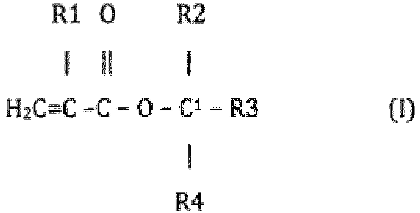
worin R1 -H oder eine Alkylgruppe mit 1-6 Kohlenstoffatomen ist
R2, R3 & R4 jeweils eine Alkylgruppe mit 1 bis 6 Kohlenstoffatomen umfassen
Formel (I)
und die Menge an polarem Comonomer der Formel (I) 3 bis 40 Gew.-% in dem polaren Ethylen-Copolymer beträgt; und weiterhin (Meth)acrylsäuregruppen in einer Menge von 0,1 bis 30 Gew.-% umfasst, wobei das polare Ethylen-Copolymer eine MFR₂ von 0,1 bis 4 g/10 min aufweist und wobei das polare Ethylen-Copolymer nach dem Reaktor bei einer Temperatur von 200 bis 300°C für 5 bis 30 min wärmebehandelt wird.

12. Verfahren zur Herstellung eines polaren Ethylen-Copolymers nach Anspruch 11, wobei das polare Ethylen-Copolymer in der Produktaufnahme wärmebehandelt wird.

13. Verwendung eines polaren Ethylen-Copolymers nach einem der vorangehenden Ansprüche, wobei die Compoundierung der halogenfreien flammhemmenden Polymer-Zusammensetzung bei maximal 220°C erfolgt.

## Revendications

1. Composition de polymère ignifugeante sans halogène comprenant
a) un copolymère d'éthylène polaire comprenant un comonomère polaire de formule 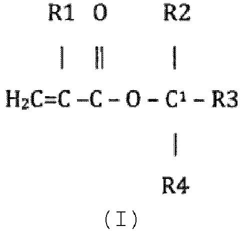
dans laquelle R1 est -H ou un groupe alkyle ayant 1 à 6 atomes de carbone,
R2, R3 et R4 comprennent chacun un groupe alkyle ayant 1 à 6 atomes de carbone,
et la quantité de comonomère polaire de formule (I) est de 3 à 40 % en poids dans le copolymère d'éthylène polaire ; et comprenant en outre des groupes acide (méth)acrylique en une quantité de 0,1 à 30 % en poids ;
b) une charge ignifugeante inorganique en une quantité de 10 à 70 % en poids ;
c) une gomme de silicone en une quantité de 0,1 à 20 % en poids ;
et dans laquelle le copolymère d'éthylène polaire a un MFR₂ de 0,1 à 4 g/10 min.

2. Composition de polymère ignifugeante sans halogène selon la revendication 1, dans laquelle R1 est -CH₃.

3. Composition de polymère ignifugeante sans halogène selon la revendication 1 ou la revendication 2, dans laquelle R2, R3 et R4 sont tous identiques.

4. Composition de polymère ignifugeante sans halogène selon la revendication 1, dans laquelle R2, R3 et R4 sont tous -CH₃.

5. Composition de polymère ignifugeante sans halogène selon l'une quelconque des revendications précédentes, dans laquelle le copolymère d'éthylène polaire a un MFR₂ de 0,3 à 4 g/10 min.

6. Composition de polymère ignifugeante sans halogène selon l'une quelconque des revendications précédentes, dans laquelle les groupes acide acrylique sont créés dans un procédé post-réacteur.

7. Composition de polymère ignifugeante sans halogène selon la revendication 6, dans laquelle le copolymère d'éthylène polaire n'a pas de monomère frais introduit dans le réacteur haute pression qui comprend un quelconque acide (méth)acrylique.

8. Structure stratifiée comprenant un substrat de métal et une couche de polymère adjacente au métal, dans laquelle la couche de polymère comprend une composition de polymère ignifugeante sans halogène de l'une quelconque des revendications précédentes.

9. Câble comprenant un conducteur métallique et au moins une ou plusieurs couches, dans lequel au moins une couche est une couche de polymère comprenant une composition de polymère ignifugeante sans halogène de l'une quelconque des revendications 1 à 7 entourant le conducteur métallique.

10. Câble selon la revendication 9, dans lequel la couche de polymère est une couche ignifugeante.

11. Procédé pour produire un copolymère d'éthylène polaire comprenant un comonomère polaire de formule 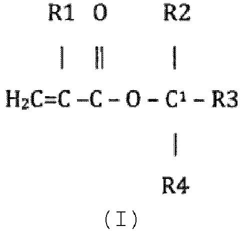
dans laquelle R1 est -H ou un groupe alkyle ayant 1 à 6 atomes de carbone,
R2, R3 et R4 comprennent chacun un groupe alkyle ayant 1 à 6 atomes de carbone,
formule (I)
et la quantité de comonomère polaire de formule (I) est de 3 à 40 % en poids dans le copolymère d'éthylène polaire ; et comprenant en outre des groupes acide (méth) acrylique en une quantité de 0,1 à 30 % en poids, dans lequel le copolymère d'éthylène polaire a un MFR₂ de 0,1 à 4 g/10 min, et dans lequel le copolymère d'éthylène polaire est traité à la chaleur après le réacteur à une température de 200 à 300°C pendant 5 à 30 minutes.

12. Procédé pour produire un copolymère d'éthylène polaire selon la revendication 11, dans lequel le copolymère d'éthylène polaire est traité à la chaleur dans le récepteur de produit.

13. Utilisation d'un copolymère d'éthylène polaire de l'une quelconque des revendications précédentes, dans laquelle la combinaison de la composition de polymère ignifugeante sans halogène est effectuée à un maximum de 220°C.
